# EUROPÄISCHE PATENTSCHRIFT

(11) **EP 1 559 686 B1**
(45) Veröffentlichungstag und Bekanntmachung des Hinweises auf die Patenterteilung: **27.03.2013**
(21) Anmeldenummer: 04000591.0
(22) Anmeldetag: 14.01.2004
(51) Int. Cl.: C02F 3/12, B01D 21/24, C02F 1/00

(54) **Klärbecken mit Auslasseinrichtung für Klarwasser**
Clarification device with outlet device for clarified water
Clarificateur avec un dispositif de sortie pour l'eau clarifiée

(43) Veröffentlichungstag der Anmeldung: 03.08.2005
(73) Patentinhaber: ATB Umwelttechnologien GmbH, 32457 Porta Westfalica (DE)
(72) Erfinder: Baumann, Markus, 32547 Bad Oeynhausen (DE)
(74) Vertreter: TER MEER - STEINMEISTER & PARTNER GbR

(56) Entgegenhaltungen:
- EP-A- 0 979 902
- EP-A2- 1 493 477
- WO-A-92/03386
- WO-A1-96/03352
- DE-A- 3 605 727
- DE-A1- 1 459 454
- DE-U1- 29 805 781
- GB-A- 2 042 494
- US-A- 4 707 252
- US-A- 6 010 631
- "Zulassungsnummer Z-55.3-9" In: "Allgemeine bauaufsichtliche Zulassung", 8 January 2002 (2002-01-08), Deutsches Institut für Bautechnik, Berlin

## Beschreibung

Die vorliegende Erfindung betrifft eine Kleinkläranlage, umfassend ein Belebtschlamm enthaltendes Klärbecken mit einer Auslaßeinrichtung für Klarwasser, welche Auslaßeinrichtung im oberen Beckenbereich angeordnet ist und ein vorgeschaltetes Steigrohr umfaßt, gemäß dem Oberbegriff des Anspruchs 1.

Bei den Klärbecken der eingangs genannten Art handelt es sich üblicherweise um die letzte Klärstufe einer Kläranlage, in der das vorgereinigte Schmutzwasser einer biologischen Endreinigung durch Belebtschlammklärung unterzogen wird. Der dabei anfallende überschüssige Belebtschlamm sammelt sich auf dem Boden des Beckens und wird von dort aus in ein Becken zurückgepumpt, das eine Vorstufe bei der Klärung darstellt und aus welchem das Schmutzwasser in das Klärbecken eingeleitet wird.

Insbesondere kann es sich bei dem Klärbecken der hier vorliegenden Art um eine Klärkammer einer Kleinkläranlage handeln, wie sie beispielsweise in dem deutschen Gebrauchsmuster 202 04 232 U1 sowie in den europäischen Patentanmeldungen 00 103 417 und 02 022 120 des Anmelders vorgeschlagen werden. Bei den dort beschriebenen Kleinkläranlagen ist das Klärbecken eine der Kammern eines Drei-Kammer-Behälters. der durch Trennwände unterteilt ist. Die Überführung des Schmutzwassers von einer Kammer in die nächste, die die jeweils folgende Klärstufe darstellt, erfolgt durch Pumpeinrichtungen über die Trennwände hinweg. Überschüssiger Belebtschlamm, der sich in der Klärkammer der letzten Klärstufe ansammelt, wird vom Kammerboden mittels einer Pumpeinrichtung in die vorhergehende Kammer rückgeführt.

Eine Auslaßeinrichtung für eine Klärkammer, die ein Steigrohr mit einem darin angeordneten Schwimmer umfaßt, ist in US-A-2,944,669 dargestellt.

Eine Auslaßeinrichtung für das Klarwasser aus dem Klärbecken ist üblicherweise im oberen Beckenbereich angeordnet, so dass das Klarwasser etwa auf der Höhe des Wasserspiegels entnommen und abgeleitet werden kann. Die in den zitierten Anmeldungen vorgeschlagenen Auslaßeinrichtungen umfassen einfache Überläufe und Pumpeinriehtungen, die das Klärwasser aufnehmen und abführen. Es versteht sich, dass das entnommene Klarwasser weitgehend frei von Belebtschlamm sein soll, der sich in dem Becken befindet und insbesondere bei der Einleitung von Luft mit einem Belüftungs-Injektor aufgewirbelt wird.

Wenngleich die Belebtschlammflocken schwerer als das Wasser sind und sich mit der Zeit am Beckenboden ablagern, führen die ständigen Turbulenzen beim Einleiten des Wassers dazu, dass auch unmittelbar unterhalb des Wasserspiegels eine gewisse Schlammkonzentration vorherrscht und in die Auslaßeinrichtung gelangt. In der Praxis läßt sich dies nur vermeiden, indem das Klarwasser nicht kontinuierlich entnommen wird, sondern der Betrieb der Auslaßeinrichtung durch Absetzphasen unterbrochen wird, in denen der Belebtschlamm sich allmählich absetzen kann, bis die Konzentration von Verunreinigungen auf Höhe der Auslaßeinrichtung ausreichend gering ist. Der Wechsel zwischen Belüftungsphasen und Absetzphasen begrenzt jedoch den Durchsatz deer Anlage.

Aufgabe der vorliegenden Erfindung ist es daher, eine Kleinkläranlage der eingangs genannten Art zu schaffen, die es ermöglicht, kontinuierlich und ohne den genannten Phasenwechsel zu arbeiten und damit den Durchsatz zu erhöhen.

Diese Aufgabe wird erfingdungsgemäß durch eine Kleimkläranlage gemäß Anspruch 1 gelöst.

Der Auslaß des erfindungsgemäßen Klärbeckens ist in einem oberen Abschnitt eines vertikalen Steigrohrs angeordnet, das an seinem unteren Ende mit einer seitlichen Öffnung über einem stark geneigten Boden versehen ist. Der Mengenstrom der Klarwasser-Entnahme steht in einem solchen Verhältnis zu dem Strömungsquerschnitt des Steigrohres, dass die Aufstiegsgeschwindigkeit des Wassers im Steigrohr niedriger ist als die Sinkgeschwindigkeit der im Wasser enthaltenen Schlammpartikel. Der Auslaß umfaßt eine Drosselstelle in einem Ablaufrohr, das im wesentlichen waagerecht aus dem Steigrohr und dem Klärbecken austritt.

Durch die Anordnung des Auslasses im Steigrohr wird nur Klarwasser entnommen, das zuvor durch die untere Öffnung des Steigrohrs nach oben bis zum Auslaß gestiegen ist. Da der Öffnungsquerschnitt der Drosselstelle relativ klein ist, wird der Durchsatz, also das pro Zeiteinheit entnommene Volumen durch den Öffnungsquerschnitt bestimmt. Dieser kann so bemessen sein, dass der Anstieg des Klarwassers im Steigrohr sehr langsam erfolgt.

Daher kann sich Belebtschlamm, der im Steigrohr enthalten ist, in dessen unterem Bereich absetzen, und das zum Auslaß gelangende Klarwasser ist weitgehend frei von Verunreinigungen. Das Steigrohr umschließt somit ein Volumen, in dem der Absetzvorgang des Belebtschlamms weitgehend unabhängig davon stattfindet, ob außerhalb des Steigrohrs im übrigen Bereich des Klärbeckens Turbulenzen stattfinden, wie sie etwa beim Einleiten von Schmutzwasser oder Luft auftreten.

Das Steigrohr bildet damit einen Raum, der von dem übrigen Innenraum des Klärbeckens weitgehend abgeschlossen ist. In diesem Sinn ist es vorteilhaft, wenn das Steigrohr einen unteren Boden aufweist und der Wassereintritt nur durch eine Öffnung oberhalb des Bodens erfolgen kann, die der angrenzenden Behälterwand zugewandt ist. Vorzugsweise ist der Boden des Steigrohrs stark geneigt, so dass angesammelter Schlamm abrutschen und durch die Öffnung austreten kann. Der Boden verhindert insbesondere den Eintritt der im Klärbecken im übrigen herrschenden Turbulenzen in den Raum des Steigrohrs. Das Steigrohr bildet somit einen gesonderten Behälter, in dem eine kontinuierliche Absetzphase stattfindet. Damit ist es nicht mehr notwendig, im gesamten Klärbecken zwischen Belüftungsphasen und Absetzphasen zu wechseln. Die Absetzphasen können entfallen. Das führt zu einer Beschleunigung des Klärbetriebes. Die Klarwasserentnahme kann kontinuierlich erfolgen.

Die Anlage kann insgesamt kleiner, einfacher und kostengünstiger ausgeführt werden im Vergleich zu herkömmlichen Anlagen gleicher Leistung.

Eine im wesentlichen kontinuierliche Klarwasserentnahme ist auch dann möglich, wenn mit unregelmäßigem Schmutzwasserzulauf und zeitweiligen erhöhten Schmutzwassermengen gerechnet werden muß. Das Klärbecken ist insgesamt so auszulegen, dass für derartige Fälle ein ausreichendes Puffervolumen zur Verfügung steht. Die Drosselstelle im Ausmaß ist variabel und Kann entsprechend dem durchschnittlichen Schmutzwasserzulauf eingestellt werden.

Eine bevorzugte Ausführungsform der Erfindung ergibt sich aus Unteranspruch 2.

Anspruch 3 betrifft ein Verfahren zum Betrieb einer derartigen Kleinkläranlage.

Im folgenden wird ein bevorzugtes Ausführungsbeispiel der Erfindung anhand der beigefügten Zeichnung näher erläutert.
- Fig. 1: zeigt eine Draufsicht auf einen Drei-Kammer-Behälter mit einem erfindungsgemäß ausgerüsteten Klärbecken; und
- Fig. 2: zeigt eine seitliche Detailansicht der erfindungsgemäßen Auslaßeinrichtung für das Klärbecken aus Fig. 1.

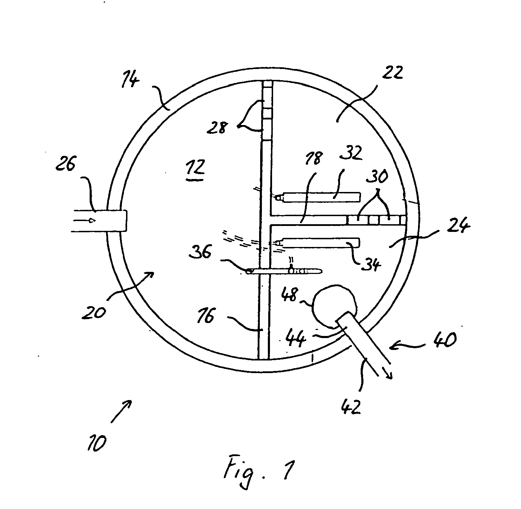

Der in Fig. 1 gezeigte Drei-Kammer-Behälter 10 umfaßt ein kreisrundes Bodenteil 12 mit darauf aufgesetzten Ringen, die eine zylindrische Seitenwand 14 des Behälters 10 bilden. Der Behälter 10 kann insbesondere aus Beton bestehen. Der Innenraum des Behälters 10 ist durch eine diametrale Trennwand 16 sowie eine weitere, zu dieser senkrecht stehende Trennwand 18 unterteilt in ein größeres Becken 20, dessen Volumen der Hälfte des Innenraums des Behälters 10 entspricht, sowie in zwei weitere, kleinere Becken 22.24, die zwei Vierteln dieses Innenraums entsprechen.

Auf der linken Seite in Fig. 1 ist ein Zulauf 26 angeordnet, der in das größere Becken 20 eintritt und über welchen Schmutzwasser in dieses Becken 20 eingeleitet wird. Im Bereich der diametralen Trennwand 16, der in Fig. 1 oben liegt, sind Überläufe 28 angeordnet, die das größere Becken 20 mit dem oben rechts angeordneten kleineren Becken 22 verbinden. Ferner sind gleichartige Überläufe 30 in der kürzeren Trennwand 18 angeordnet. Die Überläufe 28.30 befinden sich unterhalb des Wasserspiegels, damit Oberflächenschmutz nicht in das jeweils folgende Becken mitgeführt wird.

Die kleineren Becken 22.24 sind mit Membranlüftern 32.34 versehen, die sich auf dem Boden der Becken 22.24 befinden und von außen beispielsweise durch einen Kompressor mit Luft versorgt werden. Schließlich befindet sich in dem kleineren Becken 24 ein Druckluftheber 36 zur Schlammrückführung aus dem Becken 24 zurück in das erste, größere Becken 20 über die Trennwand 16 hinweg.

In bezug auf die oben beschriebenen Einzelheiten entspricht der hier dargestellte Drei-Kammer-Behälter 10 der Anordnung, der in dem Gebrauchsmuster 202 04 232 der Anmelderin beschrieben ist. Es handelt sich hierbei um eine Kleinkläranlage zur Belebtschlammklärung. Das Schmutzwasser, das durch den Zulauf 26 in den Behälter 12 eingeleitet wird, gelangt zunächst in das größere Becken 20 und durch die Überläufe 28 und 30 nacheinander in das Becken 22 und in das Becken 24. Das größere Becken 20 wird als Schlammspeicher genutzt: während die Behandlung mit Luftsauerstoff in den kleineren Becken 22.24 erfolgt. Anstelle der erwähnten Membran-Belüfter werden zumeist Tauchbelüfter verwendet. Auf diese Einzelheiten soll es hier nicht ankommen.

Aus dem letzten Klärbecken 24 wird schließlich das gereinigte Klarwasser mithilfe einer Auslaßeinrichtung 40 entnommen. Diese Auslaßeinrichtung 40 umfaßt ein Ablaufrohr 42, das in Fig. 1 nach rechts unten durch die Beckenwand 14 aus dem Klärbecken 24 austritt, so dass ein Rohrstutzen 44 in das Innere des Beckens 24 hineinragt. Dieser Rohrstutzen 44 verläuft im wesentlichen horizontal, kann jedoch geringfügig geneigt sein, so dass ein selbsttätiges Ablaufen des in den Rohrstutzen 44 eingeleiteten Klarwassers nach außen begünstigt wird.

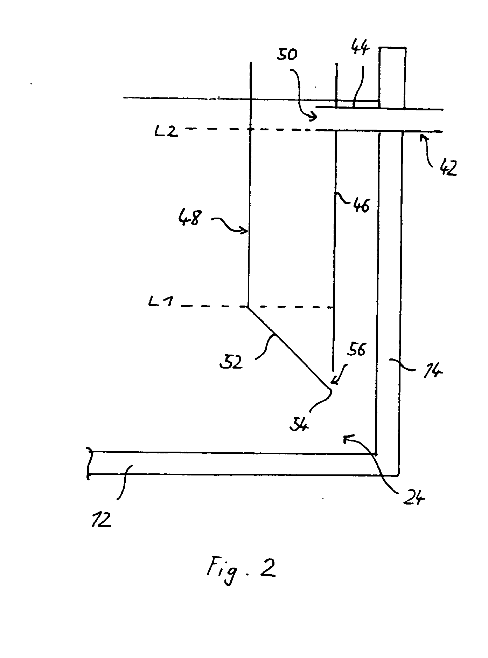

Weitere Einzelheiten der Auslaßeinrichtung 40 werden im folgenden anhand von Fig. 2 beschrieben. Der Rohrstutzen 44 verläuft im Inneren des Beckens 24 durch die zylindrische Seitenwand 46 eines vertikalen Steigrohrs 48, das sich in der Nähe der Beckenwand 14 etwa vom Wasserspiegel bis zu einem Bereich oberhalb des Bodens 12 erstreckt. Der Auslaß 50, gebildet durch den Rohrstutzen 44, befindet sich somit in einem oberen Abschnitt des Steigrohrs 48. An seinem oberen Ende ist das Steigrohr 48 offen, und sein unteres Ende ist durch einen gegenüber der Horizontalen geneigten Boden 52 weitgehend verschlossen. Lediglich in dem Randbereich 54, der das untere Ende des Steigrohrs 48 darstellt, befindet sich eine Öffnung 56 in der zylindrischen Seitenwand 46, durch die das im Becken 24 enthaltene Wasser in das Steigrohr 48 eindringen und in diesem aufsteigen kann. Die Öffnung liegt auf der der Beckenwand 14 zugewandten Seite des Steigrohrs.

In einem vertikalen Abschnitt, der an seinem unteren Ende durch den oberen Rand des geneigten Bodens 52 und an seinem oberen Ende durch die Unterkante des Rohrstutzens 44 begrenzt wird und in Fig. 2 durch die gestrichelten Linien L1 und L2 bezeichnet wird, weist das Steigrohr 48 einen konstanten kreisförmigen Innenquerschnitt auf. Das heißt, das innerhalb des Steigrohrs 48 aufsteigende Wasser durchströmt in vertikaler Richtung innerhalb des Abschnitts zwischen L1 und L2 einen konstanten Strömungsquerschnitt. Erreicht das Wasser den Auslaß 50 des Rohrstutzens 44, strömt es in das Ablaufrohr 42 ein und wird aus dem Becken 24 abgeführt.

Das in dem Becken 24 enthaltene Wasser führt Klärschlamm mit sich, der schwerer als Wasser ist und sich daher auf dem Boden 12 des Beckens 24 absetzt.

Durch Turbulenzen im Becken 24, die zum Beispiel beim Einleiten von Luft entstehen, wird der Schlamm jedoch immer wieder aufs Neue aufgewirbelt, so dass die Konzentration von Schlammpartikeln im Bereich der Wasseroberfläche relativ hoch sein kann und ein unmittelbares Abführen des Klarwassers im Wasseroberflächenbereich problematisch ist. Das vom Steigrohr 48 umschlossene Wasservolumen ist hingegen vor dem Auftreten solcher turbulenten Strömungen weitgehend geschützt. Die Klärschlammpartikel in dem Wasser, das durch die untere Öffnung 56 in das Steigrohr 48 eintritt und in diesem allmählich aufsteigt, setzen sich auf dem geneigten Boden 52 des Steigrohrs 48 ab und rutschen durch die Öffnung 56 wieder nach außen. Damit gewährleistet wird, dass das Klarwasser, das in den Rohrstutzen 44 eintritt. eine ausreichend niedrige Klärschlammpartikel-Konzentration aufweist, ist der horizontale Strömungsquerschnitt des Steigrohrs 48 im Bereich zwischen den Ebenen L1 und L2 erheblich größer bemessen als der Öffnungsquerschnitt der nicht gezeigten Drosselstelle des Auslasses 50. Der Durchsatz, das heißt, der Volumenstrom durch den Auslaß 50 und der Strömungsquerschnitt des Steigrohrs 48 sind auf solche Weise aufeinander abgestimmt, dass die vertikale Strömungsgeschwindigkeit des innerhalb des Steigrohrs 48 aufsteigenden Wassers relativ klein ist und insbesondere die Sinkgeschwindigkeit der darin enthaltenen Klärschlamm-Partikel größer ist als die Aufstiegsgeschwindigkeit des Wassers. Diese Strömungs- und Querschnittsverhältnisse lassen sich vom Fachmann in einfacher Weise bestimmen.Der als Drossel mit einstellbarem Strömungsquerschnitt ausgebildete Auslaß (50) ermöglicht, die Aufstiegsgeschwindigkeit der Wassersäule im Steigrohr 48 auch während des Betriebs der Anlage noch variieren zu können.

Das Steigrohr 48 stellt zusammen mit dem Rohrstutzen 44 eine Art Abscheider dar, der es ermöglicht, innerhalb der aufsteigenden Wassersäule im Steigrohr 48 die Klärschlamm-Partikel durch die Wirkung der Schwerkraft abzuscheiden und am oberen Ende der Säule Klarwasser durch den Auslaß 50 zu entnehmen, das eine ausreichend niedrige Partikelkonzentration aufweist. Dieser Vorgang ist weitgehend unabhängig davon, ob im Klärbecken 24 Turbulenzen herrschen, die im Bereich außerhalb des Steigrohrs 48 ein Absinken der Klärschlamm-Partikel verhindern. Daher ist keine ausgedehnte Absetzphase mehr notwendig, wie es bei den herkömmlichen Kläranlagen der Fall ist.

Die Absetzphasen können zumindest stark verkürzt werden, und es ist sogar ein kontinuierliches Entnehmen von Klarwasser durch die Auslaßeinrichtung 40 möglich. Außerdem kann die Anlage so konstruiert sein, dass auf leistungsfähige Pumpeinrichtungen zur Entnahme des Klarwassers ganz verzichtet werden kann, so dass der apparative Aufwand zur Konstruktion der Anlage verringert wird. Eine Umrüstung herkömmlicher Kleinkläranlagen durch nachträglichen Einbau der erfindungsgemäßen Auslaßeinrichtung 40 ist ohne weiteres möglich.

## Patentansprüche

1. Kleinkläranlage, umfassend als letzte Klärstufe ein Belebtschlamm enthaltendes Klärbecken mit einem Schmutzwasserzulauf zur Einleitung von Schmutzwasser in das Klärbecken, einer Belüftungseinrichtung und einer Auslaßeinrichtung (40) für Klarwasser, welche Auslaßeinrichtung im oberen Beckenbereich angeordnet ist und ein vorgeschaltetes Steigrohr (48) umfaßt, von dessen oberen Bereich ein seitlich aus dem Klärbecken austretender Auslaß (50,42) ausgeht, wobei das Steigrohr (48) durch einen stark geneigten Boden (52) verschlossen ist und dass im unteren Randbereich (54) des Steigrohres (48) auf der tieferen Seite des geneigten Bodens (52) eine Öffnung (56) unmittelbar oberhalb des Bodens in der Seitenwand (46) des Steigrohres vorgesehen ist, **dadurch gekennzeichnet, dass** der Auslaß (50,42) einen im wesentlichen horizontal angeordneten Rohrstutzen (44) umfasst, dessen Öffnungsquerschnitt durch eine Drossel mit einstellbarem Strömungsquerschnitt bestimmt wird, dass der Strömungsquerschnitt des Steigrohres erheblich größer bemessen ist als der Öffnungsquerschnitt des Auslasses (50).

2. Kleinkläranlage nach Anspruch 1, **dadurch gekennzeichnet, dass** das Steigrohr derart angeordnet ist, dass die Öffnung (56) der angrenzenden Behälterwand zugewandt ist.

3. Verfahren zum Betrieb einer Kleinkläranlage gemäß Anspruch 1, umfassend das Sammeln von Schmutzwasser in einer Vorklärkammer, das Überführen von vorgereinigtem Schmutzwasser aus der Vorklärkammer in das Belebtschlamm enthaltende Klärbecken, und eine biologische Belebtschlammklärung des vorgereinigten Schmutzwassers im Klärbecken unter Belüftung, **dadurch gekennzeichnet, dass** dem Klärbecken kontinuierlich gereinigtes Klarwasser entnommen wird, indem das Klarwasser durch ein Steigrohr (48) geleitet wird, das an seinem unteren Ende durch einen stark geneigten Boden (52) verschlossen ist und in seinem unteren Randbereich (54) auf der tieferen Seite des geneigten Bodens (52) eine Öffnung (56) unmittelbar oberhalb des Bodens in der Seitenwand (46) des Steigrohres aufweist, durch die das Klarwasser in das Steigrohr (48) eindringt, in diesem aufsteigt und durch einen Auslaß (50,42) im oberen Bereich des Steigrohrs (48) ausgeleitet wird, welcher Auslaß (50,42) einen im wesentlichen horizontal angeordneten Rohrstutzen (44) umfasst, dessen Öffnungsquerschnitt durch eine Drossel mit einstellbarem Strömungsquerschnitt bestimmt wird, wobei der Strömungsquerschnitt des Steigrohres erheblich größer bemessen ist als der Öffnungsquerschnitt des Auslasses (50), und dass der Strömungsquerschnitt der Drossel so an den Strömungsquerschnitt des Steigrohrs (48) angepasst wird, dass die Aufstiegsgeschwindigkeit der Wassersäule im Steigrohr (48) eingestellt wird.

## Claims

1. Small sewage clarification device, comprising a clarification chamber containing activated sludge as final clarification stage, said clarification chamber comprising a waste water inlet for supplying waste water into the clarification chamber, an aeration device and an outlet device (40) for clarified water, said outlet device being disposed in the upper portion of the clarification chamber and comprising an upstream riser tube (48) from whose upper portion an outlet branches off in a lateral direction out of the clarification chamber, said riser tube (48) being closed by a sharply inclined bottom (52), wherein an opening (56) is provided in the lower rim portion (54) of the riser tube (48) at the lower side of the inclined bottom (52) immediately above the bottom within the sidewall (46) of the riser tube, **characterized in that** the outlet (50,42) comprises a generally horizontal pipe section (44), wherein the opening cross-section of the pipe section is delimited by a restrictor with adjustable opening section, wherein the flow cross-section of the riser tube is much larger than the opening cross-section of the outlet (50).

2. Small sewage clarification device according to claim 1, **characterized in that** said riser tube is provided such that the opening (56) faces the adjacent side wall of the clarification chamber.

3. Method for operating a small sewage clarification device according to claim 1, comprising the collection of waste water within a pre-clarification chamber, supplying the pre-clarified waste water from the pre-clarification chamber into the clarification chamber containing activated sludge, and biologically cleaning the pre-clarified waste water within the clarification chamber by means of activated sludge in an aerated state, **characterized in that** clarified water is fed continuously from the clarification chamber by feeding the clarified water through the riser tube (48) that is closed at its lower end by a sharply inclined bottom (52) and comprises at its lower rim portion (54) at the lower side of the inclined bottom (52) an opening (56) positioned immediately above the bottom within the side wall (46) of the riser tube, through which the clarified water enters the riser tube (48), rises within the riser tube and is conducted through an outlet (42) within the upper portion of the riser tube (48), said outlet (50,42) comprising a generally horizontal pipe section (44), wherein the opening cross-section of the pipe section is delimited by a restrictor with adjustable flow cross-section, wherein the flow cross-section of the riser tube is much larger than the opening cross-section of the outlet (50), and the flow cross-section of the restrictor is adapted to the flow cross-section of the riser tube (48) in a way that the rising velocity of the water column within the riser tube (48) is delimited.

## Revendications

1. Installation de clarification fine comportant, en tant que dernier étage de clarification, un réservoir de clarification contenant des boues activées avec une alimentation en eau boueuse pour introduire de l'eau boueuse dans le réservoir de clarification, un dispositif d'aération et un dispositif de sortie (40) pour l'eau clarifiée, lequel dispositif de sortie est agencé dans la zone supérieure du réservoir et inclut un tuyau montant (46) raccordé en amont, à partir de la zone supérieure duquel part une sortie (50, 42) quittant le réservoir de clarification, dans laquelle le tuyau montant (48) est fermé par un fond (52) fortement incliné et dans la zone de bord inférieure (54) du tuyau montant (48), du côté le plus profond du fond incliné (52), est prévue une ouverture (56) directement au-dessus du fond dans la paroi latérale (46) du tuyau montant, **caractérisée en ce que** la sortie (50, 42) inclut une tubulure (44) agencée de manière sensiblement horizontale, dont la section transversale d'ouverture est déterminée par un étranglement ayant une section transversale d'écoulement réglable, et **en ce que** la section transversale d'écoulement du tuyau montant est dimensionnée nettement supérieure à la section transversale d'ouverture de la sortie (50).

2. Installation de clarification fine selon la revendication 1, **caractérisée en ce que** le tuyau montant est agencé de telle sorte que l'ouverture (56) est dirigée vers la paroi de conteneur contiguë.

3. Procédé pour faire fonctionner une installation de clarification fine selon la revendication 1, incluant les étapes consistant à recueillir de l'eau boueuse dans un réservoir de pré-clarification, transférer l'eau boueuse pré-nettoyée à partir de la chambre de pré-clarification dans le réservoir de clarification contenant les boues activées, et réaliser, par aération, une clarification biologique des boues activées de l'eau boueuse pré-nettoyée dans le réservoir de clarification, **caractérisé en ce que** l'eau clarifiée nettoyée de manière continue est prélevée dans le réservoir de clarification, l'eau clarifiée étant transportée à travers un tuyau montant (48) dont l'extrémité inférieure est fermée par un fond fortement incliné (52) et dont la zone de bord inférieure (54), du côté le plus profond du fond incliné (52), comporte une ouverture (56) située directement au-dessus du fond dans la paroi latérale (46) du tuyau montant, ouverture par laquelle l'eau clarifiée pénètre dans le tuyau montant (48), monte dans celui-ci et est évacuée dans la zone supérieure du tuyau montant (48) par une sortie (50, 42), laquelle sortie (50, 42) inclut une tubulure (44) agencée de manière sensiblement horizontale, dont la section transversale d'ouverture est déterminée par un étranglement ayant une section transversale d'écoulement réglable, dans lequel la section transversale d'écoulement du tuyau montant est dimensionnée nettement supérieure à la section transversale d'ouverture de la sortie (50), et **en ce que** la section transversale d'écoulement de l'étranglement est adaptée à la section transversale d'écoulement du tuyau montant (48) de manière à régler la vitesse de montée de la colonne d'eau dans le tuyau montant (48).
